# EUROPÄISCHE PATENTSCHRIFT

(11) **EP 1 090 240 B1**
(45) Veröffentlichungstag und Bekanntmachung des Hinweises auf die Patenterteilung: **23.04.2003**
(21) Anmeldenummer: 99907269.7
(22) Anmeldetag: 22.01.1999
(51) Int. Cl.: F16K 17/04

(54) **DRUCKBEGRENZUNGSVENTIL**
PRESSURE CONTROL VALVE
SOUPAPE A LIMITATION DE PRESSION

(30) Priorität: 06.02.1998 DE 19804752
(43) Veröffentlichungstag der Anmeldung: 11.04.2001
(73) Patentinhaber: Bosch Rexroth AG, 97816 Lohr am Main (DE)
(72) Erfinder: MACHAT, Götz-Dieter, D-97816 Lohr (DE); MEYER, Karl-Josef, D-97794 Rieneck (DE); DJENADIJA, Dragoljub, D-97828 Marktheidenfeld (DE)
(74) Vertreter: Winter, Brandl, Fürniss, Hübner, Röss, Kaiser, Polte, Partnerschaft
(86) Internationale Anmeldenummer: DE9900162
(87) Internationale Veröffentlichungsnummer: WO99040349

(56) Entgegenhaltungen:
- FR-A- 1 398 893
- FR-A- 2 192 679
- GB-A- 2 029 548
- US-A- 2 793 656
- US-A- 2 969 084

## Beschreibung

Die Erfindung betrifft ein Sitzventil, insbesondere ein Druckbegrenzungsventil gemäß dem Oberbegriff des Patentanspruchs 1.

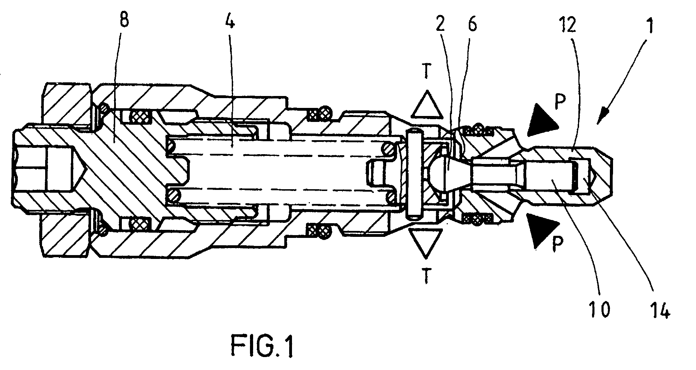

Druckbegrenzungsventile werden zur Begrenzung eines Systemdrucks eines hydraulischen Kreislaufes eingesetzt. Zur Systemabsicherung werden dabei direkt gesteuerte und vorgesteuerte Druckbegrenzungsventile eingesetzt. Aus dem Mannesmann Rexroth-Datenblatt RD 25 710/09.96 ist ein direkt gesteuertes Druckbegrenzungsventil gemäß Fig. 1, auf die bereits hier Bezug genommen sei, bekannt, bei dem ein kegelförmiger Schließkörper 2 durch eine Druckfeder 4 gegen einen Ventilsitz 6 vorgespannt ist. Die Einstellung des Systemdrucks erfolgt mittels einer Verstellschraube 8, über die die Vorspannung der Druckfeder 4 und damit die Andruckkraft des Schließkörpers 2 auf den Ventilsitz 6 einstellbar ist. Beim Überschreiten eines voreingestellten Maximal drucks am Eingangsanschluß P wird der Schließkörper 2 gegen die Kraft der Druckfeder 4 von seinem Ventilsitz 6 abgehoben, so daß eine Verbindung zu einem Tankanschluß T hergestellt und der Systemdruck auf seinen voreingestellten Wert beschränkt ist.

Bei Schwankungen des am Eingangsanschluß P anliegenden Systemdruckes, kann es zu entsprechenden Axialbewegungen des Schließkörpers kommen, so daß dieser hochfrequente Schwingungen ausführt und dabei gegen den Ventilsitz 6 schlägt. Dieses unerwünschte "Rattern" des Schließkörpers 2 führt einerseits zu einer erheblichen Lärmbelästigung, andererseits kann die Sitzkante des Ventilsitzes 6 beschädigt werden. Um ein derartiges "Rattern" zu vermeiden, ist der bekannte Schließkörper 2 mit einem Dämpfungszapfen 10 ausgebildet, der mit einem vorbestimmten Passungsspiel in einer Axialbohrung eines Sitzkörpers 12 geführt ist. Dieser Dämpfungszapfen 10 bewirkt, daß unerwünschte axiale Bewegungen des Schließkörpers 2 gedämpft werden, da beim Schließen oder Öffnen des Schließkörpers 2 sich in einem Dämpfungsraum 14 befindliches Hydraulikfluid durch den Ringspalt zwischen dem Dämpfungszapfen 10 und der Axialbohrung im Sitzkörper 12 hindurch verdrängt oder nachgesaugt werden muß. Das Dämpfungsvolumen mit dem Ringspalt ist so ausgelegt, daß der Dämpfungszapfen den Öffnungshub des Schließkörpers, 2 nicht behindert.

Die GB 20 29 548 A zeigt ein Druckbegrenzungsventil, bei dem das Hydraulikfliud nicht über einen Ringspalt, sondern über eine Art Steuerkante (Durchbruch) im Dämpfungszapfen verdrängt oder nachgesaugt wird. Dabei wirken der Schließkörper und die Steuerkante über die gleiche Ventilsitzkante.

Bei geringen abgeführten Hydraulikölvolumenströmen heben die Schließkörper entsprechend wenig von dem Ventilsitz ab, so daß der Sitz-Steuerquerschnitt sehr klein ist und somit wie ein Filter wirkt, in dem Schmutzpartikel hängen bleiben. Bei ungünstigen Betriebsbedingungen lagern sich diese Schmutzpartikel im Ventilsitzbereich an, so daß kein dichtes Schließen des Ventils mehr möglich ist.

Demgegenüber liegt der Erfindung die Aufgabe zugrunde, ein Sitzventil, insbesondere ein Druckbegrenzungsventil zu schaffen, bei dem die Dichtigkeit gegenüber herkömmlichen Lösungen verbessert ist.

Diese Aufgabe wird durch ein Sitzventil mit den Merkmalen des Patentanspruchs 1 gelöst.

Bei der erfindungsgemäßen Lösung wird dem Schließkörper ein getrennt davon ausgebildeter Steuerschieber zugeordnet, der mit einer Steuerkante ausgeführt ist, über die ein zwischen einem Ventilsitz und einem Eingangsanschluß ausgebildeter Steuerquerschnitt aufsteuerbar ist. D.h., bei der erfindungsgemäßen Lösung sind zwei Steuerquerschnitte hintereinander geschaltet. Der Dämpfungsschieber ist vorzugsweise so ausgebildet, daß er in Anlage an den Schließkörper bringbar ist, so daß der sich bei einem Systemdruck einstellende Öffnungshub des Schließkörpers größer ist als bei der eingangs beschriebenen Konstruktion. Durch den sich bei geringen Volumenströmen einstellenden größeren Sitz-Steuerquerschnitt wird ein Hängenbleiben von Schmutzpartikeln verhindert, so daß der Ventilsitz nicht anhaftende Partikel verschmutzt oder beschädigt wird. Mit dieser Maßnahme ist somit stets ein dichtes Anliegen des Schließkörpers auf dem Ventilsitz gewährleistet.

Bei kegeligen Schließkörpern besteht ein weiteres Problem darin, daß die Kraftwirkungslinie der die Schließkraft bestimmenden Druckfeder häufig nicht koaxial zur Ventilsitzachse sondern leicht schräg angestellt dazu verläuft. Demzufolge wird der Schließkörper schräg auf den Ventilsitz gedrückt, so daß der Schließkörper entlang eines eliptischen Querschnittes auf der kreisrunden Sitzkante des Ventilsitzes aufliegt und somit nicht abdichten kann. Zur Vermeidung dieses schrägen Aufsitzens des Schließkörpers auf dem Ventilsitz kann der Schließkörper mit einer balligen oder kugelförmigen Sitzfläche ausgeführt werden, so daß der Schließkörper stets entlang einer kreisförmigen Radialebene auf dem Ventilsitz aufliegt.

Die Steuerkante des Ventilschiebers wird vorteilhafterweise an einem Radialbund ausgebildet, durch den ein Öffnungsquerschnitt zwischen dem Ventilsitz und dem Eingangsanschluß aufsteuerbar ist.

Bei der Erprobung der erfindungsgemäßen Ventilanordnung zeigte es sich, daß sich das Ansprechverhalten weiter optimieren läßt, wenn die Steuerkante des Ventilschiebers und die Sitz-Steuerkante mit negativer Überdekkung ausgebildet werden, das heißt, daß bei auf der Sitzkante aufsitzendem Schließkörper durch die Steuerkante des Dämpfungsschiebers bereits ein vorbestimmter Steuerquerschnitt geöffnet ist oder aber gerade aufgesteuert wird (Überdeckung gleich Null).

Durch die Ausbildung eines sich kegelförmig verjüngenden Ansatzes stromaufwärts der Steuerkante läßt sich die Volumenstrom-Hubverstärkung am Dämpfungsschieber weiter optimieren, so daß der Öffnungshub des Ventilschiebers und damit auch der Öffnungshub des Schließkörpers bei geringen Volumenströmen vergrößert wird.

Die mit der Steuerkante des Dämpfungsschiebers zusammenwirkende Umfangskante des Ventilgehäuses kann bei einer Ausführungsform durch zumindest eine Querbohrung im Ventilgehäuse gebildet werden, die in der Verbindungsbohrung mündet. Diese Querbohrung kann als Radialbohrung ausgebildet oder schräg dazu angestellt werden.

Zur Verbesserung der Dämpfungswirkung kann der Dämpfungsschieber mit einem Dämpfungssteg versehen werden, der in Bezug zu den Dämpfungsschieber aufnehmenden Verbindungsbohrung mit einem vorbestimmten Passungsspiel ausgeführt ist.

Die Dämpfung läß sich alternativ oder zusätzlich noch durch eine Düse bewirken, die als Axialbohrung in einer Verschlußschraube der Verbindungsbohrung oder aber durch entsprechende Ausgestaltung des Gewindes zur Aufnahme der Verschlußschraube ausgebildet ist.

Zur Verbesserung der Axialführung des Dämpfungsschiebers kann dieser mit einem Führungssteg ausgeführt werden, der vorzugsweise an dem zum Schließkörper weisenden Endabschnitt ausgebildet ist.

Die Axialbewegung des Dämpfungsschiebers läßt sich auf einfache Weise begrenzen, indem ein Umfangsabschnitt des Dämpfungsschiebers als Anschlagschulter ausgebildet wird, die auf eine entsprechende Schulter der Verbindungsbohrung aufläuft. Durch diese Hubbegrenzung des Dämpfungsschiebers ist gewährleistet, daß der Eingangsanschluß des Sitzventiles nicht durch die Steuerkante des Dämpfungsschiebers vollständig zugesteuert werden kann.

Der Aufbau des Schließkörpers ist besonders einfach, wenn dieser als Kugel ausgeführt wird, die mit einem Federteller für eine Druckfeder verbunden ist.

Sonstige vorteilhafte Ausgestaltungen der Erfindung sind Gegenstand der weiteren Unteransprüche.

Im folgenden werden bevorzugte Ausführungsbeispiele der Erfindung anhand schematischer Zeichnungen näher erläutert.

Es zeigen:
Fig. 1 eine Schnittdarstellung eines bekannten Druckbegrenzungsventils;
Fig. 2 eine Schnittdarstellung eines erfindungsgemäßen Druckbegrenzungsventils mit Dämpfungsschieber;
Fig. 3 eine vereinfachte Variante des Druckbegrenzungsventils aus Fig. 2;
Fig. 4 eine Ausführungsform eines Druckbegrenzungsventils mit einem Dämpfungsschieber gemäß Fig. 2 und fertigungstechnisch vereinfachter Ausbildung einer gehäuseseitigen Steuerkante;
Fig. 5 ein weiteres Ausführungsbeispiel zur Ausbildung einer gehäuseseitigen Steuerkante; und
Fig. 6 ein Ausführungsbeispiel mit vereinfachtem Dämpfungsschieber und Schrägbohrung zur Ausbildung der gehäuseseitigen Steuerkante und eines Eingangsanschlusses.

Bei den folgenden Ausführungen werden für einander entsprechende Bauelemente die gleichen Bezugszeichen verwendet, wie sie bei der Beschreibung des Standes der Technik gemäß Fig. 1 verwendet wurden.

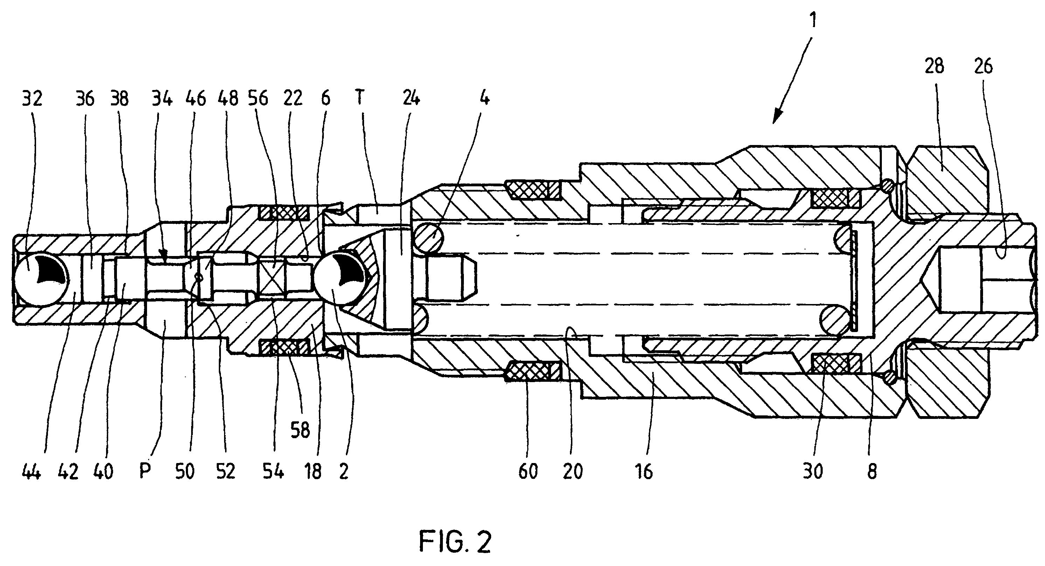

Fig. 2 zeigt einen Längsschnitt durch ein Druckbegrenzungsventil 1, das in Patronenbauweise zum Einbau in Blockkonstruktionen ausgeführt ist. Das erfindungsgemäße Druckbegrenzungsventil (DBV) hat ein zweiteiliges Gehäuse mit einem Ventilgehäuse 16 und einem daran befestigten Sitzgehäuse 18. Beim gezeigten Ausführungsbeispiel erfolgt die Befestigung durch eine Bördelung; selbstverständlich sind auch andere Befestigungsarten möglich. Das Ventilgehäuse 16 hat eine Axialbohrung 20, die koaxial zu einer radial verkleinerten Verbindungsbohrung 22 des Sitzgehäuses 18 verläuft. Die ventilgehäuseseitige Umfangskante der Verbindungsbohrung 22 bildet einen Ventilsitz 6 für einen Schließkörper 2, der bei dem in Fig. 2 dargestellten Ausführungsform als Kugel ausgeführt ist. Dieser kugelige Schließkörper 2 ist form- und kraftschlüssig mit einem Federteller 24 verbunden, an dessen Rückseite (vom Schließkörper 2 entfernt) eine Druckfeder 4 angreift, die an einer in die Axialbohrung 20 eingeschraubten Verstellschraube 8 abgestützt ist. Durch Verstellen der mit einen Innensechskant 26 versehenen Verstellschraube 8 läßt sich die Vorspannung der Druckfeder 4 und somit die Anpreßkraft des Schließkörpers 2 auf den Ventilsitz 6 variieren. Die vorgewählte Axialposition der Verstellschraube 8 mit Bezug zum Ventilgehäuse 16 läßt sich durch eine Kontermutter 28 festlegen. Zur Abdichtung ist am Außenumfang der Verstellschraube 8 eine Dichtungsanordnung 30 ausgebildet, die an der Umfangswandung der Axialbohrung 20 anliegt.

Im Sitzgehäuse 18 und im Ventilgehäuse 16 sind Radialbohrungssterne ausgebildet, so daß ein Eingangsanschluß P bzw. ein Tankanschluß T geschaffen werden. Alternativ könnten die Anschlüsse P, T jeweils auch durch eine einzige Bohrung ausgebildet werden.

Das Sitzgehäuse 18 ist von der Verbindungsbohrung 22 durchsetzt, wobei der vom Schließkörper 2 entfernte Endabschnitt durch eine eingedrückte Kugel 32 verschlossen ist. Im Bereich zwischen der Kugel 32 und dem Schließkörper 2 ist in der Verbindungsbohrung 22 ein axial verschiebbarer Dämpfungsschieber 34 aufgenommen, dessen in Fig. 2 rechte Stirnseite als Anlageabschnitt für den Schließkörper 2 ausgebildet ist.

Das in Fig. 2 dargestellte Ausführungsbeispiel des Dämpfungsschiebers 34 hat an seinem linken Endabschnitt einen Anschlagbund 36, der mit Passungsspiel in dem entsprechenden Bereich der Verbindungsbohrung 22 aufgenommen ist. Diese hat im Axialabstand zu der Ringstirnfläche des Anschlagbundes 36 eine Radialschulter 38, auf die der Anschlagbund 36 nach einer vorbestimmten Axialbewegung (nach rechts in Fig. 2) aufläuft, so daß dessen Hub in Richtung zum Schließkörper 2 begrenzt ist.

Im Axialabstand zum Anschlagbund 36 ist ein Dämpfungssteg 40 ausgebildet, der mit Passungsspiel in dem sich an die Radialschulter 38 anschließenden, radial zurückgestuften Teil der Verbindungsbohrung 22 geführt ist. Dabei wird es bevorzugt, wenn das Passungsspiel des Dämpfungssteges 40 geringer ist als dasjenige des Anschlagbundes 36. Die Radialschulter 38, die entsprechende Stirnseite des Dämpfungsstegs 40 und der Anschlagbund 36 begrenzen ein Dämpfungsvolumen 42. Der aufgrund des Passungsspiels ausgebildete Ringspalt um den Dämpfungssteg 40 wirkt als Dämpfungsdrossel. Durch die rückseitige Stirnfläche des Anschlagbundes 36 und die Kugel 32 wird ein weiterer Teilabschnitt 44 der Verbindungsbohrung 22 abgegrenzt, der ebenfalls als Dämpfungsvolumen dient.

Im Anschluß an den Dämpfungssteg 40 ist der Dämpfungsschieber 34 radial zurückgestuft und hat im Axialabstand zum Dämpfungssteg 40 einen kegelförmigen Ansatz 46, der in einen Steuersteg 48 übergeht. Die Umfangskante zwischen dem kegelförmigen Ansatz 46 und dem Steuersteg 48 ist als Steuerkante 50 ausgebildet. Im Bereich dieser Steuerkante 50 ist die Verbindungsbohrung 22 durch eine Schulter 52 radial erweitert, so daß durch Zusammenwirkung der Steuerkante 50 und der Schulter 52 bei einer Axialverschiebung des Dämpfungsschiebers 34 ein Steuerquerschnitt aufsteuerbar ist. Das Hydrauliköl kann dabei vom Eingangsanschluß P durch den Steuerquerschnitt hindurch entlang des erweiterten Teils der Verbindungsbohrung 22 den Steuersteg 48 umströmen.

An dem radial erweiteren Teil der Verbindungsbohrung 22 schließt sich ein radial verengter, den Ventilsitz 6 ausbildender Endabschnitt der Verbindungsbohrung 22 an, in dem ein Führungssteg 54 des Dämpfungsschiebers 34 gleitend geführt ist. Der Führungssteg 54 ist mit Axialdurchbrüchen 56 für das Hydraulikfluid versehen, so daß dieses nach der Umströmung des Steuersteges 48 ohne nennenswerten Druckverlust zum Ventilsitz 6 hin strömen kann.

In der gezeigten Grundposition, das heißt in derjenigen Position, in der der Schließkörper 2 auf dem Ventilsitz 6 aufliegt und der Dämpfungsschieber 34 am Schließkörper anliegt, ist der durch die Steuerkante 50 und die Schulter 52 definierte Steuerquerschnitt gerade noch verschlossen oder bereits geringfügig geöffnet, so daß die Überdeckung der Steuerkante 50 und der Sitzkante gleich Null oder negativ ist.

Am Außenumfang des Sitzgehäuses 18 und des Ventilgehäuses 16 sind Dichtringe 58, 60 zur Abdichtung des Druckbegrenzungsventils im Ventilblock vorgesehen.

Im folgenden wird zum besseren Verständnis die Funktion des erfindungsgemäßen DBV erläutert.

Bei Anlegen eines unterhalb des maximalen Systemdrucks liegenden Druckes am Eingangsanschluß P liegt der Schließkörper 2 auf dem Ventilsitz 6 auf, so daß der Tankanschluß T versperrt ist. Die Stirnseiten des Dämpfungsschiebers 34 sind druckausgeglichen, da das Hydrauliköl einerseits aufgrund des Passungsspiels des Dämpfungssteges 40 und des Anschlagbundes 36 in das Dämpfungsvolumen 42 und den Teilabschnitt 44 der Verbindungsbohrung eintreten kann. Andererseits kann das Hydrauliköl aufgrund des Passungsspiels und/oder bei negativer Überdeckung (siehe vorhergehende Ausführungen) hin zum Ventilsitz 6 strömen, so daß an den beiden Stirnseiten des Dämpfungsschiebers 34 der gleiche Druck anliegt.

Bei Erreichen des vorbestimmten maximalen Systemdrucks wird der kugelförmige Schließkörper 2 gegen die Kraft der Druckfeder 4 von seinem Ventilsitz 6 abgehoben. Bei Erreichen des Maximaldrucks bewegt sich der Dämpfungsschieber 34 in der Darstellung gemäß Fig. 2 nach rechts, so daß die Steuerkante 50 den Steuerquerschnitt aufsteuert und das Hydrauliköl vom Eingangsanschluß P zum Ventilsitz 6 und durch den aufgesteuerten Sitz-Steuerquerschnitt hindurch zum Tankanschluß T strömen kann.

Durch die Hintereinanderschaltung von zwei Steuerquerschnitten wird bei dem erfindungsgemäßen Druckbegrenzungsventil ein vergleichsweise größerer Öffnungshub des Schließkörpers 2 erzielt, als er bei einem entsprechenden Druckbegrenzungsventil gemäß dem Stand der Technik herbeiführbar wäre. Dieser vergrößerte Hub stellt sich aufgrund zweier Effekte ein. Bei zwei hintereinander geschalteten Steuerquerschnitten (ein Steuerquerschnitt am Dämpfungsschieber 34 und ein Steuerquerschnitt beim Sitzkörper 2) ist der Druckabfall Δp an jedem Steuerquerschnitt geringer als der Gesamtdruckabfall über beide Steuerquerschnitte. Der über beide Steuerquerschnitte strömende Hydraulikölvolumenstrom ist proportional zum jeweiligen Steuerquerschnitt A multipliziert mit der Wurzel aus dem Druckabfall Δp. Das heißt, der Steuerquerschnitt muß um so größer sein je kleiner der Druckabfall am jeweiligen Steuerquerschnitt ist. Aufgrund der kugeligen Ausgestaltung des Schließkörpers 2 entsteht der größere Druckabfall Δp an der Sitz-Steuerkante, so daß entsprechend der vorbeschriebenen Formel der durch die Steuerkante 50 bestimmte Steuerquerschnitt vergleichsweise groß sein muß, um den Hydraulikfluidstrom zu ermöglichen. Des weiteren ist der Hub des Dämpfungsschiebers 34 bei geringen Volumenströmen größer als derjenige des Schließkörpers 2, so daß der Dämpfungsschieber 34 aufgrund dieser beiden Effekte bei einer bestimmten Zunahme des Hydraulikölvolumenstroms einen größeren Hub macht, als dies für einen kugeligen Schließkörper 2 alleine der Fall wäre. Der Dämpfungsschieber 34 nimmt somit bei seinem Hub den Schließkörper 2 mit, so daß auch der Sitz-Steuerquerschnitt bei vergleichsweise geringen Hydraulikölvolumenströmen gegenüber den herkömmlichen Lösungen vergrößert wird. Auf diese Weise ist ein Zusetzen des Sitz-Steuerquerschnittes zuverlässig verhindert.

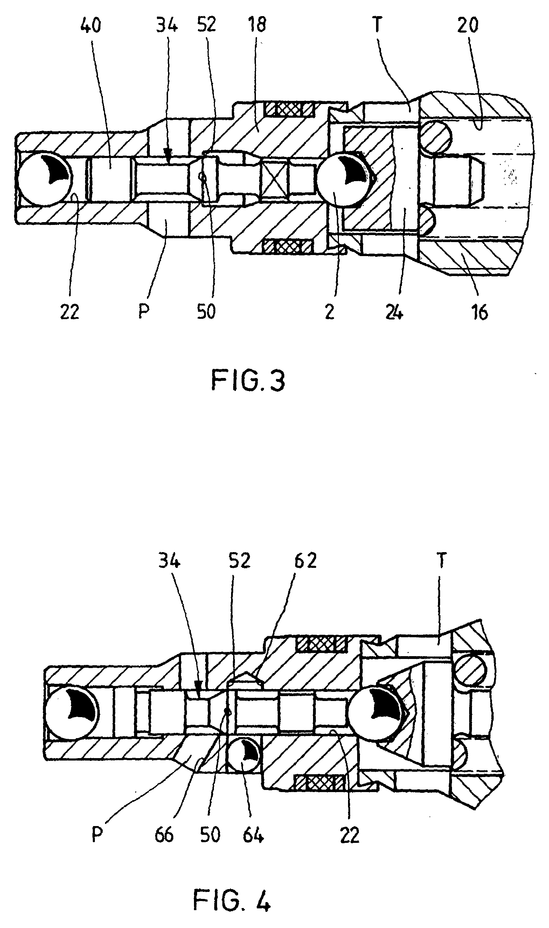

Fig. 3 zeigt ein gegenüber der Variante aus Fig. 2 vereinfachtes Ausführungsbeispiel, bei dem am linken Endabschnitt des Dämpfungsschiebers 34 lediglich ein Dämpfungssteg 40 ausgebildet ist. Der Anschlagbund 36 fehlt bei diesem Ausführungsbeispiel.

Die Verbindungsbohrung 22 ist im Bereich des Dämpfungssteges 40 mit gleichbleibendem Radius, das heißt ohne Radialschulter 38 ausgeführt, so daß dämpfungsschieberseitig kein Anschlag zur Hubbegrenzung vorgesehen ist. Der sonstige Aufbau des Ventilgehäuses 16, des Sitzgehäuses 18 und des Schließkörpers 2 mit den entsprechenden Einstelleinrichtungen entspricht im wesentlichen demjenigen des vorbeschriebenen Ausführungsbeispiels, so daß auf eine ausführliche Beschreibung verzichtet werden kann. Lediglich der Aufbau des Federtellers 24 unterscheidet sich etwas von der vorbeschriebenen Ausführungsform, dies ist jedoch für die Funktion des Druckbegrenzungsventils 1 von untergeordneter Bedeutung.

Zur Begrenzung des Hubes könnte man alternativ zum vorbeschriebenen Ausführungsbeispiel am Federteller einen Radialvorsprung vorsehen, der auf eine entsprechende Schulter der Axialbohrung 20 des Ventilgehäuses 16 aufläuft. Eine derartige Version ist bei dem bekannten Druckbegrenzungsventil gemäß Fig. 1 dargestellt, bei der der Anschlag durch einen Querbolzen realisiert ist.

Bei den vorbeschriebenen Ausführungsbeispielen ist die mit der Steuerkante 50 zusammenwirkende Schulter 52 durch eine Ausdrehung der Verbindungsbohrung 22 ausgebildet. Die Herstellung dieser Ausdrehung erfordert einen vergleichsweise hohen fertigungstechnischen Aufwand.

Bei dem in Fig. 4 dargestellten Ausführungsbeispiel wird dieser fertigungstechnische Aufwand verringert, indem die den Steuerquerschnitt begrenzende Schulter 52 durch eine Querbohrung 62 ausgebildet wird, die sich vom Außenumfang des Sitzkörpers 18 durch die Verbindungsbohrung 22 hindurch in die gegenüberliegende Umfangswandung des Sitzkörpers 18 erstreckt, so daß die gehäuseseitige Steuerkante durch die Schnittkanten zwischen Verbindungsbohrung 22 und Querbohrung 62 definiert ist. Das offene Ende der Querbohrung 62 wird durch das Einpressen einer Kugel 64 fluiddicht verschlossen. Diese Variante ist einfacher herstellbar als diejenigen Ausführungsbeispiele, bei denen die Schulter 52 durch eine Ausdrehung ausgebildet wurde.

Im unteren Teil der Fig. 4 ist des weiteren eine Variante dargestellt, bei der die den Eingangssanschluß P definierenden Zulaufbohrungen als Schrägbohrung(en) 66 ausgebildet ist (sind). Der obere Teil der Schnittdarstellung gemäß Fig. 4 zeigt ein Ausführungsbeispiel, bei dem die Zulaufbohrungen als Radialbohrung - wie bei den vorbeschriebenen Ausführungsbeispielen - ausgeführt ist. Das in Fig. 4 dargestellte Druckbegrenzungsventil hat einen Dämpfungsschieber 34, der demjenigen gleicht, wie er in Fig. 2 dargestellt ist. Selbstverständlich können bei allen vorstehend gezeigten Ausführungsbeispielen anstelle mehrerer Zulaufbohrungen auch eine einzige Zulaufbohrung eingesetzt werden. Diese Varianten erwiesen sich allerdings bei Vorversuchen aufgrund des höheren Druckverlustes als ungünstig.

Der sonstige Aufbau des in Fig. 4 dargestellten Ausführungsbeispiels entspricht demjenigen des Ausführangsbeispiels aus Fig. 2, sodaß auf weitere Erläuterungen verzichtet werden kann.

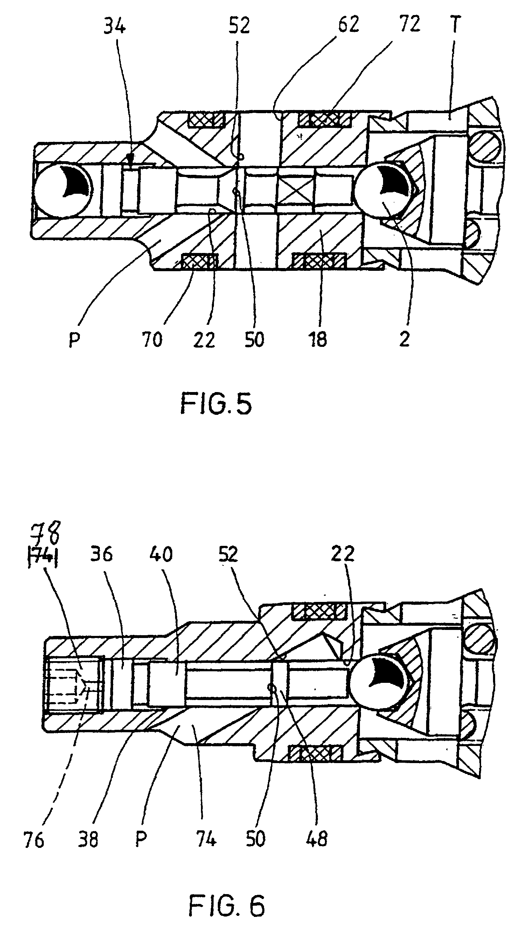

In Fig. 5 ist ein weiter vereinfachtes Ausführungsbeispiel dargestellt, bei dem die den Steuerquerschnitt bestimmende Schulter 52 als durchgehende Querbohrung 62 ausgebildet ist, das, heißt, bei dieser Variante durchsetzt die Querbohrung 62 das Sitzgehäuse 18 quer zur Verbindungsbohrung 22.

Zur Abdichtung der Querbohrung 62 sind beidseitig der Mündungsbereiche am Außenumfang zwei Dichtungsringanordnungen 70, 72 ausgebildet, so daß der Eingangsanschluß P gegenüber dem Tankanschluß T abgedichtet ist. Die einfacherere Herstellbarkeit dieser Variante (Durchgangsbohrung anstelle von Sacklochbohrung) wird mit dem Nachteil erkauft, daß der Dichtungsaufwand vergrößert ist. Des weiteren vergrößert der erforderliche Raum zur Ausgestaltung der Ringnuten für die Dichtungsanordnungen 70, 72 die Axiallänge des Sitzgehäuses 18 und damit des gesamten Druckbegrenzungsventils 1.

Bei der in Fig. 5 dargestellten Variante sind die Zulaufbohrungen für den Eingangsanschluß P wiederum als Schrägbohrungen ausgeführt, die in einer Schrägschulter am Außenumfang des Sitzgehäuses 18 münden. Der sonstiger Aufbau des in Fig. 4 dargestellten Ventils, insbesondere des Dämpfungsschiebers 34 und des Schließkörpers 2 entspricht wiederum demjenigen, wie er in Fig. 2 dargestellt ist.

Fig. 6 zeigt schließlich eine vergleichsweise einfach aufgebaute Variante, bei der die den Eingangsanschluß P definierende Zulaufbohrung als Schrägbohrung 74 ausgeführt ist, wobei die Schrägbohrung 74 die Verbindungsbohrung 22 kreuzt und in den gegenüberliegenden Umfangsabschnitt des Sitzgehäuses 18 hinein verlängert ist. Das heißt, bei dieser Variante wird die Schulter 52 zur Ausbildung des Steuerquerschnittes durch Verlängerung der Zulaufbohrung hergestellt. Bei dieser vereinfachten Konstruktion wird auch auf den Führungssteg des Dämpfungsschiebers 34 verzichtet. In der dargestellten Grundstellung befindet sich die Steuerkante 50 des Steuersteges 48 etwa im Mündungsbereich des oberen, als Sackloch endenden Teils der Schrägbohrung 74. Bei diesem Ausführungsbeispiel wird auch auf den Ansatz 46 verzichtet. Die gewünschte Volumenstrom-Hubverstärkung wird durch die Schrägbohrung im Zusammenwirken mit dem Steuerbund 48 bewirkt.

Der linke Endabschnitt des Dämpfungsschiebers 34 ist - wie bei dem Ausführungsbeispiel gemäß Fig. 2 - wiederum mit einem Dämpfungssteg 40 und einem axial dazu beabstandeten Anschlagbund 36 versehen. Dieser begrenzt in Zusammenwirkung mit der Radialschulter 38 der Verbindungsbohrung 22 die Bewegung des Dämpfungsschiebers 34 in Öffnungsrichtung (nach rechts in Fig. 6). Der Axialabstand der beiden aufeinander zuweisenden Ringflächen des Steuerstegs 48 und des Dämpfungsstegs 40 entspricht etwa dem Axialabstand zwischen den Schnittkanten der Verbindungsbohrung 22 einerseits und dem unteren Teil der Schrägbohrung 74 bzw. dem oberen Endabschnitt (Sackloch) der Schrägbohrung 74 andererseits.

Der in Fig. 6 links liegende Teil der Verbindungsbohrung 22 ist anstelle der Kugel 32 der vorbeschriebenen Ausführungsbeispiele mit einer Verschlußschraube 78 verschlossen, die in die Verbindungsbohrung 22 eingeschraubt ist. Diese kann mit einer Düsenbohrung 76 (gestrichelt angedeutet) versehen werden, so daß die Dämpfungsdüsenmittel nicht alleine durch das Passungsspiel zwischen den Radialstegen 40, 36 sondern auch durch die Düsenbohrung 76 gebildet sind. Anstelle der Düsenbohrung 76 kann durch geeignete Ausgestaltung des Gewindeeingriffs der Verschlußschraube 78 mit dem Sitzkörper 18 eine spiralförmige (Gewinde-)Düse ausgebildet werden. Selbstverständlich könnte eine derartige Verschlußschraube 78 auch bei den vorbeschriebenen Ausführungsbeispielen verwendet werden. Die einzelnen vorbeschriebenen Konstruktionsvarianten lassen sich in nahezu beliebiger Weise miteinander kombinieren, so daß die Erfindung nicht auf die vorbeschriebenen Ausführungsbeispiele beschränkt ist.

So lassen sich beispielsweise die Zulauf- und Ablaufbohrungen der vorbeschriebenen Ausführungsbeispiele als Einzelbohrung oder aber durch ein System von mehreren, am Umfang verteilten Bohrungen ausbilden. Bei dem in Fig. 6 dargestellten Ausführungsbeispiel kann anstelle einer einzigen Bohrung beispielsweise auch ein System mit drei am Umfang verteilten Schrägbohrungen 74 verwendet werden.

Die am Schließkörper 2 anliegenden Stirnfläche des Dämpfungsschiebers 34 sollte möglichst mit einer vergleichbaren Härte wie diejenige des Schließkörpers ausgebildet sein, so daß ein Eindrücken des Schließkörpers 2 in die Stirnfläche verhindert werden kann. Ein derartiges Eindrücken des Schließkörpers 2 würde die durch die Druckfeder 4 eingeleiteten Querkräfte auf die Schließkörper erhöhen, was eine Erhöhung der Hysterese zur Folge haben würde.

Offenbart ist ein Druckbegrenzungsventil, bei dem einem Schließkörper ein Dämpfungsschieber zugeordnet ist. Dieser hat eine Steuerkante, über die ein Steuerquerschnitt zwischen einem Eingangsanschluß und dem Ventilsitz aufsteuerbar ist.

## Patentansprüche

1. Sitzventil, insbesondere Druckbegrenzungsventil (1) mit einem gegen einen Ventilsitz (6) vorgespannten Schließkörper (2), über den eine Verbindung zwischen einem Eingangsanschluß (P) und einem Tankanschluß (T) aufsteuerbar ist und dem ein Dämpfungselement (34) zugeordnet ist, das in einer den Eingangsanschluß (P) mit dem Ventilsitz (6) verbindenden Verbindungsbohrung (22) geführt ist, wobei das Dämpfungselement ein getrennt vom Schließkörper (2) ausgebildeter Dämpfungschieber (34) ist, der in Anlage an den Schließkörper (2) bringbar ist und zwischen einem Ventilsitz (6) und einem Eingangsanschluß (P) eine Steuerkante (50) hat, **dadurch gekennzeichnet, daß** die Steuerkante (50) in Zusammenwirken mit einer von dem Ventilsitz (6) getrennten. Schulter (52) einen angeordneten Steuerquerschnitt aufsteuert.

2. Druckbegrenzungsventil nach Patentanspruch 1, **dadurch gekennzeichnet, daß** der Schließkörper (2) eine ballige oder kugelige Sitzfläche hat.

3. Sitzventil nach Patentanspruch 1 oder 2, **dadurch gekennzeichnet, daß** der Dämpfungsschieber (34) einen die Steuerkante (50) bildenden Steuersteg (48) hat, durch den ein Steuerquerschnitt zwischen Ventilsitz (6) und Eingangsanschluß (P) aufsteuerbar ist.

4. Sitzventil nach einem der vorhergehenden Patentansprüche, **dadurch gekennzeichnet, daß** die Steuerkante (50) in der Schließstellung des Schließkörpers (2) bereits einen Öffnungsquerschnitt des Steuerquerschnitts aufgesteuert hat.

5. Sitzventil nach Patentanspruch 3 oder 4, **dadurch gekennzeichnet, daß** der Dämpfungsschieber (34) stromaufwärts der Steuerkante (50) einen sich etwa kegelig verjüngenden Ansatz (46) hat.

6. Sitzventil nach. einem der Patentansprüche 3 bis 5, **dadurch gekennzeichnet, daß** die Verbindungsbohrung (22) im Bereich des Steuersteges (48) erweitert ist.

7. Sitzventil nach Patentanspruch 6, **dadurch gekennzeichnet, daß** die Erweiterung durch zumindest eine Querbohrung (62), oder Schrägbohrung (74) gebildet ist, die in der Verbindungsbohrung (22) mündet.

8. Sitzventil nach einem der vorhergehenden Patentansprüche, **gekennzeichnet durch** zumindest einem am Dämpfungsschieber (34) ausgebildeten Dämpfungssteg (40), der mit einem vorgegebenen Passungsspiel in der Verbindungsbohrung (22) geführt ist.

9. Sitzventil nach Patentanspruch 8, **dadurch gekennzeichnet, daß** ein dämpfungsstegseitiger Endabschnitt der Verbindungsbohrung (22) durch eine Verschlußschraube (78) verschlossen ist, deren Gewinde eine Dämpfungsdrossel bildet oder die mit einer Düsenbohrung (76) versehen ist.

10. Sitzventil nach einem der vorhergehenden Patentansprüche, **dadurch gekennzeichnet, daß** der Dämpfungsschieber (34) einen Führungssteg (54) hat, der gleitend in der Verbindungsbohrung (22) aufgenommen ist und Durchbrüche (56) zur Durchführung des Hydrauliköles hat.

11. Sitzventil nach einem der vorhergehenden Patentansprüche, **dadurch gekennzeichnet, daß** ein Umfangsabschnitt des Dämpfungsschiebers (34) als Anschlagschulter (36) zur Begrenzung der Schieberbewegung bei abgehobenen Schließkörper (2) ausgebildet ist.

12. Sitzventil nach einem der vorhergehenden Patentanschlüsse, **dadurch gekennzeichnet, daß** der Schließkörper (2) eine Kugel ist, die mit einem Federteller (24) für eine Druckfeder (4) verbunden ist.

## Claims

1. A poppet valve, in particular a pressure control valve (1) including a poppet (2) biased against a valve seat (6), whereby a connection between an inlet port (P) and a tank port (T) may be controlled open, and to which an attenuating member (34) is associated which is guided in a connecting bore (22) connecting the inlet port (P) to the valve seat (6), wherein said attenuating member is an attenuation spool (34) formed separately from said poppet (2), comprising a metering edge (50) for controlling open a control section between an inlet port P and said valve seat (6) and capable of being taken into contact against said poppet (2), **characterised in that** said metering edge (50), in co-operation with a shoulder (52) that is separate from said valve seat (6), controls open a provided control section.

2. A pressure control valve in accordance with claim 1, **characterised in that** said poppet (2) has a ball-shaped or spherical seat surface.

3. A poppet valve in accordance with claim 1 or 2, **characterised in that** said attenuation spool (34) includes a control web (48) forming said metering edge (50), whereby a control section between valve seat (6) and inlet port (P) may be controlled open.

4. A poppet valve in accordance with any one of the preceding claims, **characterised in that** said metering edge (50) has already controlled open an opening section of said control section in the closed position of said poppet (2).

5. A poppet valve in accordance with claim 3 or 4, **characterised in that** said attenuation spool (34) comprises an attachment (46) tapering approximately conically upstream from said metering edge (50).

6. A poppet valve in accordance with any one of claims 3 to 5, **characterised in that** said connecting bore (22) is expanded in the range of said control web (48).

7. A poppet valve in accordance with claim 6, **characterised in that** said expansion is formed by at least one transversal bore (62) or oblique bore (74) opening into said connecting bore (22).

8. A poppet valve in accordance with any one of the preceding claims, **characterised by** at least one attenuation web (40) formed on the attenuation spool (34) and guided in said connecting bore (22) with a predetermined engagement play.

9. A poppet valve in accordance with claim 8, **characterised in that** an attenuation web-side end portion of said connecting bore (22) is closed by a screw plug (78), the thread of which forms a damping throttle or is provided with a nozzle bore (76).

10. A poppet valve in accordance with any one of the preceding claims, **characterised in that** said attenuation spool (34) includes a guide web (54) slidingly received in said connecting bore (22) and including passages (56) for passing through the hydraulic oil.

11. A poppet valve in accordance with any one of the preceding claims, **characterised in that** a peripheral portion of said attenuation spool (34) has the form of a stop shoulder (36) for limiting the spool movement in the raised condition of said poppet (2).

12. A poppet valve in accordance with any one of the preceding claims, **characterised in that** said poppet (2) is a sphere connected with a spring cup (24) for a pressure spring (4).

## Revendications

1. Soupape à siège, en particulier soupape à limitation de pression (1) avec un corps de fermeture (2) précontraint contre un siège de soupape (6), par l'intermédiaire duquel une liaison entre un raccord d'entrée (P) et un raccord de réservoir (T) peut être commandée et auquel est associé un élément d'amortissement (34) qui est guidé dans un alésage de raccordement (22) reliant le raccord d'entrée (P) au siège de soupape (6), l'élément d'amortissement étant une soupape à tiroir d'amortissement (34) formée séparément du corps de fermeture (2) qui peut être mise en appui sur le corps de fermeture (2) et qui comporte une arête de commande (50) entre un siège de soupape (6) et un raccord d'entrée (P), **caractérisée en ce que** l'arête de commande (50) commande, en coopération avec un épaulement (52) séparé du siège de soupape (6), une section transversale de commande aménagée.

2. Soupape de limitation de pression selon la revendication 1, **caractérisée en ce que** le corps de fermeture (2) présente une surface de siège convexe ou sphérique.

3. Soupape à siège selon la revendication 1 ou 2, **caractérisée en ce que** la soupape à tiroir d'amortissement (34) comporte une nervure de commande (48) formant l'arête de commande (50), par l'intermédiaire de laquelle une section transversale de commande peut être commandée entre le siège de soupape (6) et le raccord d'entrée (P).

4. Soupape à siège selon l'une quelconque des revendications précédentes, **caractérisée en ce que** l'arête de commande (50), dans la position de fermeture du corps de fermeture (2), commande une section transversale d'ouverture de la section transversale de commande.

5. Soupape à siège selon la revendication 3 ou 4, **caractérisée en ce que** la soupape à tiroir d'amortissement (34) comporte, en amont de l'arête de commande (50), un épaulement (46) s'amincissant sensiblement en forme de cône.

6. Soupape à siège selon l'une quelconque des revendications 3 à 5, **caractérisée en ce que** l'alésage de raccordement (22) est élargi dans la zone de la nervure de commande (48).

7. Soupape à siège selon la revendication 6, **caractérisée en ce que** l'élargissement est formé par au moins un alésage transversal (62) ou un alésage en biais (74) qui débouche dans l'alésage de raccordement (22).

8. Soupape à siège selon l'une quelconque des revendications précédentes, **caractérisée par** au moins une nervure d'amortissement (40) formée sur la soupape à tiroir d'amortissement (34) qui est guidée dans l'alésage de raccordement (22) avec un jeu d'ajustement prédéterminé.

9. Soupape à siège selon la revendication 8, **caractérisée en ce qu'**une section d'extrémité du côté de la nervure d'amortissement de l'alésage de raccordement (22) est fermée par une vis de fermeture (78) dont le filetage forme une inductance d'amortissement ou qui est munie d'un trou de buse (76).

10. Soupape à siège selon l'une quelconque des revendications précédentes, **caractérisée en ce que** la soupape à tiroir d'amortissement (34) comporte une nervure de guidage (54) qui est logé de manière à coulisser dans l'alésage de raccordement (22) et qui comporte des passages (56) pour la circulation de l'huile hydraulique.

11. Soupape à siège selon l'une quelconque des revendications précédentes, **caractérisée en ce qu'**une section périphérique de la soupape à tiroir d'amortissement (34) est formée comme épaulement d'arrêt (36) pour limiter le déplacement de la soupape à tiroir lorsque le corps de fermeture (2) est enlevé.

12. Soupape à siège selon l'une quelconque des revendications précédentes, **caractérisée en ce que** le corps de fermeture (2) est une bille qui est reliée à une cuvette de ressort (24) pour un ressort à pression (4).
